# EUROPÄISCHE PATENTSCHRIFT

(11) **EP 2 183 136 B1**
(45) Veröffentlichungstag und Bekanntmachung des Hinweises auf die Patenterteilung: **27.02.2013**
(21) Anmeldenummer: 08774587.3
(22) Anmeldetag: 01.07.2008
(51) Int. Cl.: B60T 17/22

(54) **BREMSSYSTEM FÜR EIN FAHRZEUG UND EIN VERFAHREN ZUM BETREIBEN EINES BREMSSYSTEMS FÜR EIN FAHRZEUG**
BRAKE SYSTEM FOR A VEHICLE AND A METHOD FOR THE OPERATION OF A BRAKE SYSTEM FOR A VEHICLE
SYSTÈME DE FREINAGE POUR VÉHICULE ET PROCÉDÉ D'EXPLOITATION D'UN SYSTÈME DE FREINAGE POUR VÉHICULE

(30) Priorität: 02.08.2007 DE 102007036259
(43) Veröffentlichungstag der Anmeldung: 12.05.2010
(73) Patentinhaber: Robert Bosch GmbH, 70442 Stuttgart (DE)
(72) Erfinder: STRENGERT, Stefan, 70329 Stuttgart (DE); BLESSING, Peter, 74078 Heilbronn (DE); HOFMANN, Dirk, 79401 Krnov-Pod Cvilinem (CZ); HARTER, Werner, 75428 Illingen (DE)
(86) Internationale Anmeldenummer: PCT/EP2008/058441
(87) Internationale Veröffentlichungsnummer: WO 2009/015972

(56) Entgegenhaltungen:
- EP-A- 0 832 800
- DE-A1- 19 826 131
- DE-A1- 19 832 167

## Beschreibung

Die Erfindung betrifft ein Bremssystem für ein Fahrzeug. Des Weiteren betrifft die Erfindung ein Verfahren zum Betreiben eines Bremssystems für ein Fahrzeug.

Die Druckschrift DE 198 26 131 A1 offenbart ein Bremssystem mit einer Sensoreinrichtung, einer Bremssteuereinrichtung und Radbremseinheiten. Dabei ist die Bremssteuereinrichtung mit den Radbremseinheiten jeweils über Kommunikationskanäle verbunden.

Die WO 95 13 946 beschreibt ein Bremssystem mit einem Zentralmodul und mehreren Bremsmodulen, wobei die Bremsmodule unterschiedlichen Bremskreisen zugeordnet sind. Die Bremsmodule sind mit dem Zentralmodul über ein Kommunikationssystem verbunden. Um die Verfügbarkeit des Bremssystems auch bei einem Ausfall einer dieser Komponenten aufrecht zu erhalten, weist das elektrische Bremssystem ein hydraulisches Back-Up auf.

In der DE 196 34 567 ist ein dezentrales elektromechanisches Bremssystem beschrieben. Das Bremssystem umfasst eine Pedaleinheit, eine Verarbeitungseinheit und Radpaareinheiten zur Regelung der Radbremsen. Die Energieversorgung des Bremssystems erfolgt über zwei getrennte Bordnetze.

Des Weiteren beschreibt die DE 103 57 373 B4 ein elektronisches Bremssystem, welches ein Bremspedal mit zwei Bremsanforderungsmitteln aufweist. Eines der beiden Bremsanforderungsmittel ist mit einem Zentralsteuergerät mit integrierter Bremskreissteuerung verbunden. Das andere der beiden Bremsanforderungsmittel ist an eine autarke Bremskreisansteuerung gekoppelt. Bei einem Ausfall des Zentralsteuergeräts oder der autarken Bremskreisansteuerung kann die verbliebene Bremskreisansteuerung mit ihrem Bremsanforderungsmittel die Ansteuerung eines Bremskreises vornehmen.

Herkömmliche Bremssysteme sind jedoch für ein Ausfallen von mehreren ihrer Komponenten hintereinander nur schlecht gerüstet. In der Regel ist ein Fahrzeug nach einem Ausfallen von mehreren Komponenten seines Bremssystems nicht mehr in der Lage, eine Eingabe des Fahrers zum Reduzieren der Geschwindigkeit des Fahrzeugs ausreichend zu befolgen. Das Fahrzeug kann damit in einer derartigen Situation nicht mehr sicher zu einem Stillstand gebracht werden.

Es ist deshalb wünschenswert, ein Bremssystem für ein Fahrzeug zu haben, das bei einem Ausfall von mehreren seiner Komponenten noch ein sicheres Abbremsen des betreffenden Fahrzeugs ermöglicht.

Die Erfindung schafft ein Bremssystem für ein Fahrzeug mit den Merkmalen des Anspruchs 1 und ein Verfahren zum Betreiben eines Bremssystems für ein Fahrzeug mit den Merkmalen des Anspruchs 9.

Die Erfindung beruht auf der Erkenntnis, dass die Bremswirkung eines Bremssystems mit zwei Bremskreisen nach einem Ausfallen von mehreren Komponenten des Bremssystems verbessert ist, wenn zumindest eine Radaktoreinrichtung eines ersten Bremskreises nicht nur an eine Bremssteuereinrichtung des ersten Bremskreises und über die betreffende Bremssteuereinrichtung an eine Sensoreinrichtung gekoppelt ist, sondern auch direkt mit einer Bremssteuereinrichtungen des zweiten Bremskreises und/oder mit der Sensoreinrichtung verbunden ist. Besteht die Sensoreinrichtung aus mehreren Komponenten, so können die Vorteile der Erfindung gewährleistet werden, sofern die jeweilige Radaktoreinrichtung mit einer Untereinrichtung der Sensoreinrichtung zum Bereitstellen eines Sensorsignals direkt verbunden ist. Durch die direkte Kommunikationsmöglichkeit zwischen der betreffenden Radaktoreinrichtung und der Bremssteuereinrichtung des zweiten Bremskreises und/oder der Sensoreinrichtung kann die betreffenden Radaktoreinrichtung auch nach einem Ausfallen der Bremssteuereinrichtung des ersten Bremskreises noch ein Signal zum Abbremsen eines der Radaktoreinrichtung zugeordneten Rads erhalten. Damit kann die betreffende Radaktoreinrichtung das zugehörige Fahrzeug beispielsweise nach einem Ausfallen der ersten Bremssteuereinrichtung und der Radaktoreinrichtungen des zweiten Bremskreises zum Stillstand bringen. Dies erhöht die Sicherheit für die Insassen des Fahrzeugs mit dem erfindungsgemäßen Bremssystem in einer derartigen Situation.

Zwei Komponenten des erfindungsgemäßen Bremssystems sind direkt miteinander verbunden, wenn sie entweder über eine Leitung miteinander verbunden sind oder unmittelbar nebeneinander angeordnet sind. Die direkte Verbindung zwischen den beiden Komponenten sagt dabei aus, dass diese Verbindung nicht über eine dritte Komponente, wie eine Bremssteuereinrichtung, eine Radaktoreinrichtung oder eine Sensoreinrichtung, verläuft. Stattdessen ist die direkte Verbindung so ausgelegt, dass sie nicht unterbrochen wird, wenn eine andere Bremssteuereinrichtung, eine andere Radaktoreinrichtung oder eine andere Sensoreinrichtung ausfällt.

Die vorliegende Erfindung ist nicht auf ein Bremssystem für ein Fahrzeug mit vier Rädern beschränkt. Stattdessen ist sie auch auf ein Fahrzeug mit sechs oder acht Rädern anwendbar, wobei die Anzahl der den Bremskreisen zugeordneten Radaktoreinrichtungen dann entsprechend erhöht wird.

Die in den oberen Abschnitten genannten Vorteile und Merkmale des erfindungsgemäßen Bremssystems gelten entsprechend auch für das Verfahren zum Betreiben eines Bremssystems für ein Fahrzeug.

Die erste Radaktoreinrichtung kann an die zweite Signalleitung angeschlossen und die dritte Radaktoreinrichtung an die erste Signalleitung angeschlossen sein. Dies ermöglicht ein Steuern der ersten Radaktoreinrichtung nach einem Ausfallen der ersten Bremssteuereinrichtung durch die zweite Bremssteuereinrichtung.

Zusätzlich kann die zweiten Radaktoreinrichtung an die zweite Signalleitung angeschlossen und die vierte Radaktoreinrichtung an die erste Signalleitung angeschlossen sein. Nach einem Ausfallen der ersten Bremssteuereinrichtung kann in diesem Fall auch die zweite Radaktoreinrichtung durch die zweite Bremssteuereinrichtung gesteuert werden.

Vorzugsweise sind die ersten und die zweite Bremssteuereinrichtung über eine fünfte Signalleitung direkt miteinander verbunden, wobei jede der beiden Bremssteuereinrichtungen im aktiven Zustand dazu ausgelegt ist, zu erkennen, ob die andere Bremssteuereinrichtung im aktiven Zustand ist. In diesem Fall sind die erste und die zweite Radaktoreinrichtung im aktiven Zustand dazu ausgelegt, nach einem Erkennen, dass die erste Bremssteuereinrichtung im inaktiven Zustand ist, die Steuersignale der zweiten Bremssteuereinrichtung über die zweite Signalleitung zu empfangen. Das Bremssystem kann somit auch nach einem Ausfallen einer der beiden Bremssteuereinrichtungen eine Eingabe des Fahrers zum Reduzieren der Geschwindigkeit des Fahrzeugs befolgen.

Beispielsweise berechnet die Bremssteuereinrichtung die Radbremsmomente oder die momentenbildenden Spannungen für alle Radbremsen und gibt sie an die Radaktoreinrichtungen aus. Jede der Radaktoreinrichtungen ist so ausgelegt, dass sie zunächst das Radbremsmoment bzw. die momentenbildende Spannung der eigenen Bremssteuereinrichtung befolgt. Wenn eine Radaktoreinrichtung jedoch erkennt, dass die eigene Bremssteuereinrichtung ausgefallen ist, so verwendet sie das Radbremsmoment bzw. die momentenbildende Spannung der anderen Bremssteuereinrichtung.

Erfindungsgemäß ist die erste Radaktoreinrichtung mit einer ersten Untereinrichtung der Sensoreinrichtung über eine sechste Signalleitung direkt verbunden und die dritte Radaktoreinrichtung mit einer zweiten Untereinrichtung der Sensoreinrichtung über eine siebte Signalleitung direkt verbunden. Auf diese Weise kann auch eine direkte Datenübertragung zwischen der ersten Untereinrichtung der Sensoreinrichtung und der ersten Radaktoreinrichtung sowie zwischen der zweiten Untereinrichtung der Sensoreinrichtung und der dritten Radaktoreinrichtung stattfinden.

In einer Weiterbildung ist die erste Radaktoreinrichtung im aktiven Zustand dazu ausgelegt, zu erkennen, ob die erste Bremssteuereinrichtung im aktiven Zustand ist, und nach einem Erkennen, dass die erste Bremssteuereinrichtung im inaktiven Zustand ist, das über die sechste Signalleitung von der ersten Untereinrichtung der Sensoreinrichtung übermittelte erste und/oder zweite Sensorsignal auszuwerten und ein dem ersten und/oder zweiten Sensorsignal entsprechendes Bremsmoment auf das zugeordnete Rad auszuüben. Das Ausfallen der ersten Bremssteuereinrichtung lässt sich damit gut überbrücken.

In einer bevorzugten Ausführungsform des Bremssystems ist zumindest eine der Bremssteuereinrichtungen oder eine der Radaktoreinrichtungen im aktiven Zustand dazu ausgelegt, ihre Funktionsfähigkeit zu überprüfen und sich bei einem Erkennen einer eingeschränkten Funktionsfähigkeit in den inaktiven Zustand zu schalten. Die Bremssteuereinrichtung oder Radaktoreinrichtung ist somit fail-silent ausgelegt. Damit ist gewährleistet, dass die in ihrer Funktionsfähigkeit signifikant eingeschränkte Bremssteuereinrichtung oder Radaktoreinrichtung die übrigen Komponenten nicht bei ihrer korrekten Funktionsweise beeinflusst oder gar behindert. Dies erhöht die Funktionssicherheit des betreffenden Bremssystems.

In einer weiteren bevorzugten Ausführungsform ist mindestens eine der Radaktoreinrichtungen im aktiven Zustand dazu ausgelegt, zu erkennen, ob eine vorgegebene Anzahl von Bremssteuereinrichtungen und/oder Radaktoreinrichtungen im inaktiven Zustand ist, und nach einem Erkennen, dass die vorgegebene Anzahl von Bremssteuereinrichtungen und/oder Radaktoreinrichtungen im inaktiven Zustand ist, ein vorgegebenes Bremsmoment automatisch auf das zugeordnete Rad auszuüben. Somit ist nach einem Ausfallen von mehreren seiner Komponenten hintereinander das Bremssystem noch in der Lage, ein automatisches Abbremsen des Fahrzeugs auszuführen. Die Geschwindigkeit des Fahrzeugs wird dann bei Erkennen einer aufgrund von mehreren ausgefallenen Komponenten des Bremssystems gefährlichen Situation automatisch reduziert. Dies gewährleistet eine größere Sicherheit für die Insassen des Fahrzeugs in einer derartigen gefährlichen Situation.

Somit ist über die vorliegende Erfindung gewährleistet, dass ein Fahrzeug nach einem Ausfallen von mehreren Komponenten seines Bremssystems entweder automatisch abgebremst wird oder eine vom Fahrer ausgelöste Abbremsung des Fahrzeugs befolgt wird.

Weitere Anwendungsmöglichkeiten und Vorteile der Erfindung ergeben sich aus der nachfolgenden Beschreibung von Ausführungsbeispielen, die in den Zeichnungen dargestellt sind. Es zeigen:
- Figur 1: eine Vergleichsform eines Bremssystems;
- Figur 2: ein anderes Bremssystem;
- Figur 3: eine Ausführungsform des erfindungsgemäßen Bremssystems; und
- Figur 4: eine weitere Ausführungsform des erfindungsgemäßen Bremssystems.

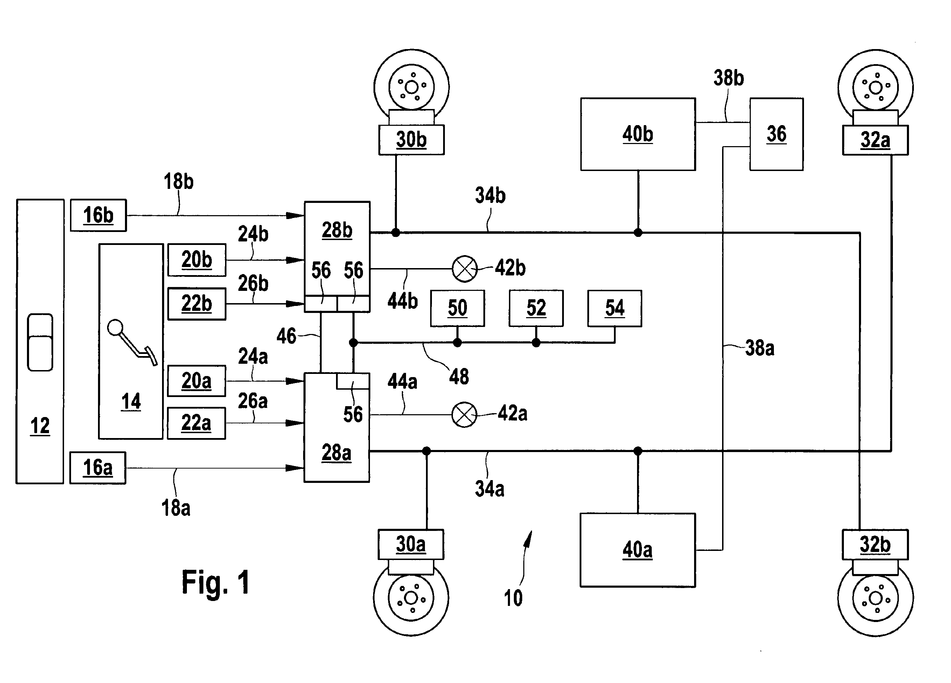

Figur 1 zeigt eine Vergleichsform eines Bremssystems für ein Fahrzeug. Das dargestellte Bremssystem 10 weist eine Parkbremsbetätigung 12 und ein Bremspedal 14 auf. Der Parkbremsbetätigung 12 sind zwei Parkbremsschalter 16a und 16b zum Erkennen eine Eingabe eines Fahrers und zum Ausgeben eines entsprechenden Sensorsignals 18a und 18b zugeordnet. Das Bremspedal 14 ist von zwei Bremspedalsensoren 20a und 20b und zwei Bremslichtschaltern 22a und 22b umgeben. Die Schalter 22a und 22b und die Sensoren 20a und 20b erfassen entweder einen Pedalweg bzw. einen Pedalwinkel des Bremspedals 14 oder eine vom Fahrer auf das Bremspedal 14 ausgeübte Kraft und stellen an ihren Ausgängen entsprechende Signale 24a, 24b, 26a und 26b bereit.

Das Bremssystem 10 ist mit zwei Bremssteuereinrichtungen 28a und 28b ausgestattet, welche zwei verschiedenen Bremskreisen zugeordnet sind. Die erste Bremssteuereinrichtung 28a steuert einen ersten Bremskreis. Dazu empfängt die erste Bremssteuereinrichtung 28a die Signale 18a, 24a und 26a der Schalter 16a und 22a und des Bremspedalsensors 20a, welche sie anschließend zum Ermitteln eines auf die Räder des ersten Bremskreises auszuübenden Bremsmoments auswertet. Die erste Bremssteuereinrichtung 28a stellt dann ein dem ermittelten Bremsmoment entsprechendes Steuersignal bereit. Entsprechend empfängt und verarbeitet die zweite Bremssteuereinrichtung 28b zum Ansteuern eines zweiten Bremskreises die Signale 18b, 24b und 26b der Schalter 16b und 22b und des Sensors 20b.

Dem ersten Bremskreis sind das linke Vorderrad und das rechte Hinterrad zugeordnet. Jedes der beiden Räder weist eine Radaktoreinrichtung 30a und 32a mit einer Bremsscheibe auf, wobei dem linken Vorderrad die Radaktoreinrichtung 30a und dem rechten Hinterrad die Radaktoreinrichtung 32a zugeordnet ist. Die beiden Radaktoreinrichtungen 30a und 32a des ersten Bremskreises sind über einen Datenbus 34a miteinander und mit der ersten Bremssteuereinrichtung 28a verbunden. Über den Datenbus 34a können die Radaktoreinrichtungen 30a und 32a und die erste Bremssteuereinrichtung 28a untereinander Daten austauschen. Ein von der ersten Bremssteuereinrichtung 28a ausgegebenes Steuersignal wird über den Datenbus 34a an die Radaktoreinrichtungen 30a und 32a weitergeleitet. Nach einem Empfang des Steuersignals üben die Radaktoreinrichtungen 30a und 32a ein entsprechendes Bremsmoment auf die ihnen zugeordneten Räder aus.

Auch der zweite Bremskreis weist zwei Radaktoreinrichtungen 30b und 32b und einen Datenbus 34b auf. Dabei ist die Radaktoreinrichtung 30b dem rechten Vorderrad und die Radaktoreinrichtung 32b dem linken Hinterrad zugeordnet. Ein Daten- und Steuersignaltransfer zwischen den Radaktoreinrichtungen 30b und 32b des zweiten Bremskreises und der zweiten Bremssteuereinrichtung 28b ist über den Datenbus 34b möglich.

Die Stromversorgung des Bremssystems 10 verläuft über ein Basisbordnetz 36. Das Basisbordnetz 36 ist mit je einer Stromleitung 38a und 38b mit zwei Bordnetzen 40a und 40b verbunden. Das Bordnetz 40a ist dem ersten Bremskreis zugeordnet und an den Datenbus 34a angeschlossen. Entsprechend ist das Bordnetz 40b mit dem Datenbus 34b des zweiten Bremskreises verbunden.

Für jeden der beiden Bremskreise ist eine Warnlampe 42a und 42b im Cockpit des Fahrzeugs mit dem Bremssystem 10 angebracht. Über die Ansteuerleitung 44a ist die Warnlampe 42a an die erste Bremssteuereinrichtung 28a gekoppelt. Entsprechend steuert die zweite Bremssteuereinrichtung 28b die Warnlampe 42b über eine Ansteuerleitung 44b.

Die beiden Bremssteuereinrichtungen 28a und 28b sind über zwei Datenbusse 46 und 48 miteinander verbunden. Der Datenbus 48 verbindet die beiden Bremssteuereinrichtungen 28 und 28b zusätzlich noch mit einem im Cockpit des Fahrzeugs angebrachten Anzeigegerät 50, mit einem ESP-System 52 (Elektronisches Stabilitätsprogramm) und mit einem Motorsteuergerät 54.

Die Bremssteuereinrichtung 28a weist am Eingang des Datenbusses 48 ein elektronisches Schutzelement 56 (EPE, Electronic Protection Element) auf. Entsprechende elektronische Schutzelemente 56 sind auch an den Eingängen der Datenbusse 46 und 48 der Bremssteuereinrichtung 28b angebracht. Die elektronischen Schutzelemente 56 sollen die Bremssteuereinrichtungen 28a und 28b vor Überspannungen schützen. Entsprechende elektronische Schutzelemente 56 können auch an den Ein- und Ausgängen der anderen Komponenten 30a, 30b, 32a, 32b, 40a und 40b der beiden Bremskreise angeordnet sein. Durch die elektronischen Schutzelemente 56 kann das Risiko eines Funktionsausfalls einer Steuereinrichtung 28a, 28b, 30a, 30b, 32a und 32b reduziert werden.

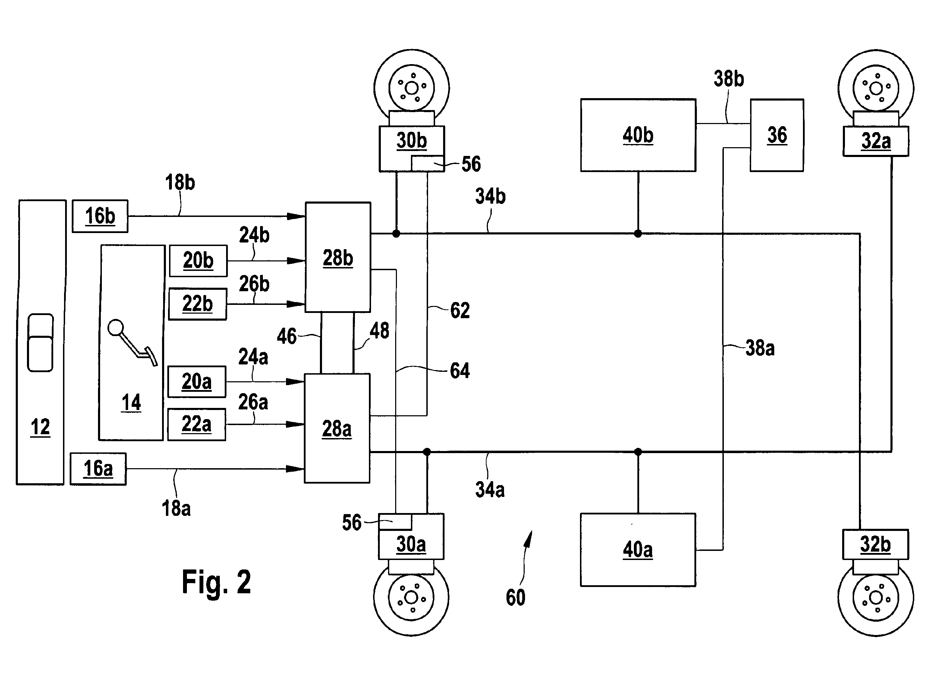

Figur 2 zeigt ein anderes Bremssystem. Das gezeigte Bremssystem 60 umfasst alle Komponenten des Bremssystems 10 der Figur 1. Allerdings sind die Warnlampen 42a und 42b, die Ansteuerleitungen 44a und 44b und die externen Geräte 50, 52 und 54 in Figur 2 nicht skizziert.

Im Unterschied zu dem Bremssystem 10 weist das Bremssystem 60 zwei Statusleitungen 62 und 64 auf. Die Statusleitung 62 verbindet die erste Bremssteuereinrichtung 28a direkt mit der Radaktoreinrichtung 30b des zweiten Bremskreises. Die Statusleitung 64 verläuft von der zweiten Bremssteuereinrichtung 28b zu der Radaktoreinrichtung 30a des ersten Bremskreises. Es wird hier darauf hingewiesen, dass keine der Statusleitungen 62 oder 64 eine zwischen den Komponenten 28a und 30b oder zwischen den Komponenten 28b und 30a angeordnete weitere Komponente aufweist. Beispielsweise ist somit über die Statusleitung 62 eine Datenübertragung zwischen der ersten Bremssteuereinrichtung 28a und der Radaktoreinrichtung 30b auch dann möglich, wenn die anderen Komponenten 28b, 30a, 32a und 32b des Bremssystems 60 ausgefallen sind.

Über die Statusleitungen 62 und 64 werden Informationen über Daten zwischen den Bremsteuereinrichtungen 28a und 28b und den Radaktoreinrichtungen 30a und 30b der Vorderräder ausgetauscht. Insbesondere meldet die erste Bremssteuereinrichtung 28a über die Statusleitung 62 den Status des ersten Bremskreises an die Radaktoreinrichtung 30b des zweiten Bremskreises. Dieser Status enthält beispielsweise eine Nachricht, dass die Bremssteuereinrichtung 28a oder die beiden Radaktoreinrichtungen 30a und 32a nicht mehr im funktionsfähigen Zustand sind. Ein entsprechender Status über den zweiten Bremskreis kann über die Statusleitung 64 von der zweiten Bremssteuereinrichtung 28b an die Radaktoreinrichtung 30a des ersten Bremskreises ausgegeben werden. Auf diese Weise können die Radaktoreinrichtungen 30a und 30b eine Situation erkennen, in welcher der andere Bremskreis nicht mehr voll funktionsfähig ist.

Im Folgenden werden die sich aus den beiden Statusleitungen 62 und 64 ergebenden Vorteile beschrieben:

Ein wesentlicher Vorteil der beiden Statusleitungen 62 und 64 besteht darin, dass bei dem Bremssystem 60 nach einem Ausfall einer Bremssteuereinrichtung 28a oder 28b noch ein Ansteuern beider Bremskreise abhängig von einer Eingabe des Fahrers an der Parkbremsbetätigung 12 und an dem Bremspedal 14 möglich ist. Fällt zum Beispiel die erste Bremssteuereinrichtung 28a aus, so wird dieses Ereignis von der zweiten Bremssteuereinrichtung 28b und den beiden Radaktoreinrichtungen 30a und 32a erkannt. Beispielsweise sendet die erste Bremssteuereinrichtung 28a kurz vor ihrem Inaktivschalten eine entsprechende Nachricht an die zweite Bremssteuereinrichtung 28b und an die beiden Radaktoreinrichtungen 30a und 32a des ersten Bremskreises. Als Alternative dazu können die Komponenten des Bremssystems 60, welche direkt miteinander verbunden sind, auch dazu ausgelegt sein, regelmäßig Meldungen über ihren aktiven Zustand untereinander auszutauschen.

Die zweite Bremssteuereinrichtung 28b, welche normalerweise nur den zweiten Bremskreis steuert, übernimmt nach dem Ausfallen der ersten Bremssteuereinrichtung 28a zusätzlich das Ansteuern des ersten Bremskreises. Über die Statusleitung 64 kann in einer weiteren Ausbildung die zweite Bremssteuereinrichtung 28b Steuersignale, beispielsweise ein Radbremsmoment oder eine einem Bremsmoment proportionale Steuerspannung, an die Radaktoreinrichtung 30a ausgeben. Die Radaktoreinrichtung 30a leitet einen Teil der Steuersignale über den Datenbus 34a an die Radaktoreinrichtung 32a weiter.

Im Gegensatz dazu ist nach einem Ausfall einer Bremssteuereinrichtung 28a oder 28b des Bremssystems 10 die noch funktionsfähige Bremssteuereinrichtung 28a oder 28b nicht dazu in der Lage, das Ansteuern des anderen Bremskreises übernehmen. Die Bremsfähigkeit des Bremssystems 10 ist damit gegenüber der Bremsfähigkeit des Bremssystems 60 ist einer derartigen Situation erheblich eingeschränkt.

Zusätzlich sind die Bordnetze 40a und 40b des Bremssystems 60 so ausgelegt, dass sie eine Versorgung einer Radaktoreinrichtung 30a, 30b, 32a oder 32b nur dann unterbrechen, wenn ein entsprechendes Befehlssignal von der Bremssteuereinrichtung 28a oder 28b des jeweiligen Bremskreises über den Datenbus 34a oder 34b empfangen wird. Somit bleibt auch nach einem Ausfallen einer der beiden Bremssteuereinrichtungen 28a und 28b die Spannungsversorgung der zugehörigen Radaktoreinrichtungen 30a und 32a oder 30b und 32b weiterhin erhalten.

Zusätzlich ist die Reaktionsfähigkeit des Bremssystems 60 auf ein Ausfallen von mehreren seiner Komponenten im Vergleich mit dem Bremssystem 10 verbessert.

Während einer Fahrt des Fahrzeugs mit dem Bremssystem 60 können beide Bremssteuereinrichtungen 28a und 28b nacheinander ausfallen. Bei dem Bremssystem 60 erkennt die Radaktoreinrichtung 30a in einer derartigen Situation über den Datenbus 34a das Ausfallen der ihr zugeordneten ersten Bremssteuereinrichtung 28a und über die Statusleitung 64 das Ausfallen der zweiten Bremssteuereinrichtung 28b des anderen Bremskreises. Auf ähnliche Weise erkennt auch die Radsteuereinrichtung 30b das Ausfallen der beiden Bremssteuereinrichtungen 28a und 28b. Die beiden den Vorderrädern zugeordneten Radaktoreinrichtungen 30a und 30b führen dann nach einem Erkennen dieser gefährlichen Situation, in welcher der Fahrer die Geschwindigkeit des Fahrzeugs nicht mehr über eine Eingabe reduzieren kann, eine automatische Reduzierung der Geschwindigkeit des Fahrzeugs aus. Zusätzlich können die Radaktoreinrichtungen 30a und 30b dazu ausgelegt sein, nach einem Erkennen der gefährlichen Situation entsprechende Nachrichten an die Radaktoreinrichtungen 32a und 32b der Hinterräder weiterzuleiten. Die Radaktoreinrichtungen 32a und 32b bremsen die Hinterräder daraufhin automatisch ab. Durch das Anlegen eines definierten Bremsmoments an jedes der vier Räder, welches beispielsweise jeweils einer Verzögerung von 0,1 g entspricht, kann die Geschwindigkeit des Fahrzeugs nach einem Ausfallen der beiden Bremssteuereinrichtungen 28a und 28b schnell reduziert werden. Vorzugsweise wird das Fahrzeug zum Stillstand gebracht und danach automatisch die Parkbremse eingelegt.

Ein derartiges, aufeinander abgestimmtes automatisches Abbremsen der Räder des Fahrzeugs durch alle vier Radaktoreinrichtungen 30a, 30b, 32a und 32b ist bei dem Bremssystem 10 nicht möglich. Bei dem Bremssystem 10 erkennen die Radaktoreinrichtungen 30a und 32a des ersten Bremskreises nach einem Ausfallen der ersten Bremssteuereinrichtung 28a und einem anschließenden Ausfallen der zweiten Bremssteuereinrichtung 28b nur, dass die erste Bremssteuereinrichtung 28a nicht mehr im aktiven Zustand vorliegt. Das Ausfallen der zweiten Bremssteuereinrichtung 28b kann den Radaktoreinrichtungen 30a und 32a des ersten Bremskreises nicht mehr mitgeteilt werden, da sie nur über die bereits ausgefallene erste Bremssteuereinrichtung 28a mit den Komponenten 28b, 30b und 32b des zweiten Bremskreises verbunden sind. Das Bremssystem 10 ist nach einem Ausfallen der beiden Bremssteuereinrichtungen 28a und 28b damit nicht mehr so funktionsfähig wie das Bremssystem 60.

Während einer Fahrt des Fahrzeugs mit dem Bremssystem 60 kann auch die Situation auftreten, dass beide Bremssteuereinrichtungen 28a und 28b und eine der beiden Radaktoreinrichtungen 30a oder 30b an einem Vorderrad ausfallen. Da aber beide Radaktoreinrichtungen 30a oder 30b der Vorderräder über den Ausfall der beiden Bremssteuereinrichtungen 28a und 28b informiert sind, kann in einer derartigen Situation die verbliebene Radaktoreinrichtung 30a oder 30b noch ein automatisches Abbremsen des Fahrzeugs bewirken.

Wenn beispielsweise die beiden Bremssteuereinrichtungen 28a und 28b und die Radaktoreinrichtung 30b des zweiten Bremskreises ausfallen, so erkennt die Radaktoreinrichtung 30a über den Datenbus 34a, dass die erste Bremssteuereinrichtung 28a ausgefallen ist. Zusätzlich kann die Radaktoreinrichtung 30a über die Statusleitung 64 erkennen, dass auch die Bremssteuereinrichtung 28b des anderen Bremskreises ausgefallen ist. Sofern zum Zeitpunkt, zu welchem die Radaktoreinrichtung 30b ausfällt noch eine der beiden Bremssteuereinrichtungen 28a und 28b funktionsfähig ist, kann eine entsprechende Information über den Datenbus 34a oder über die Statusleitung 64 an die Radaktoreinrichtung 30a ausgegeben werden. Da die Radaktoreinrichtung 30a somit erkennt, dass die ausgefallene Radaktoreinrichtung 30b kein Bremsmoment mehr auf das von ihr betriebene Vorderrad ausüben kann, führt die Radaktoreinrichtung 30a eine automatische Abbremsung mit einem erhöhten Bremsmoment durch. Als Ergänzung dazu kann die Radaktoreinrichtung 30a zusätzlich die Statusinformation über den Zustand der beiden Bremssteuereinrichtungen 28a und 28b und der Radaktoreinrichtung 30b über den Datenbus 34a an die Radaktoreinrichtung 32a ausgeben. In diesem Fall führen die beiden verbliebenen funktionsfähigen Radaktoreinrichtungen 30a und 32a des ersten diagonalen Bremskreises eine automatische Abbremsung durch.

Dies geschieht so lange, bis das Fahrzeug auf eine Höchstgeschwindigkeit von wenigen Kilometern pro Stunde verlangsamt ist oder zum Stillstand gebracht ist.

Entsprechend können die beiden Radaktoreinrichtungen 30a und 32a auch nach einem Ausfallen der beiden Bremssteuereinrichtungen 28a und 28b und der beiden Radaktoreinrichtungen 30b und 32b des anderen Bremskreises noch eine automatische Abbremsung durchführen. Dies erhöht die Sicherheit des Fahrers während einer Fahrt.

Da bei dem Bremssystem 10 der Figur 1 eine Datenübertragung zwischen den beiden Bremskreisen nur über die beiden Bremssteuereinrichtungen 28a und 28b möglich ist, können die Radaktoreinrichtungen 30a und 32a oder 30b und 32b eines Bremskreises nach einem Ausfallen einer der beiden Bremssteuereinrichtungen 28a und 28b nur ungenügend auf ein späteres Ausfallen einer Radaktoreinrichtung 30a und 32a oder 30b und 32b des anderen Bremskreises reagieren. Das Bremssystem 60 ist deshalb im Vergleich mit dem Bremssystem 10 besser für eine derartige Situation ausgebildet.

Wie in Figur 2 zu erkennen, sind die Eingänge der Statusleitungen 62 und 64 an den Radaktoreinrichtungen 30a und 30b durch die elektrischen Schutzelemente 56 geschützt. Vorzugsweise sind die elektrischen Schutzelemente 56 innerhalb der Radaktoreinrichtungen 30a und 30b angebracht.

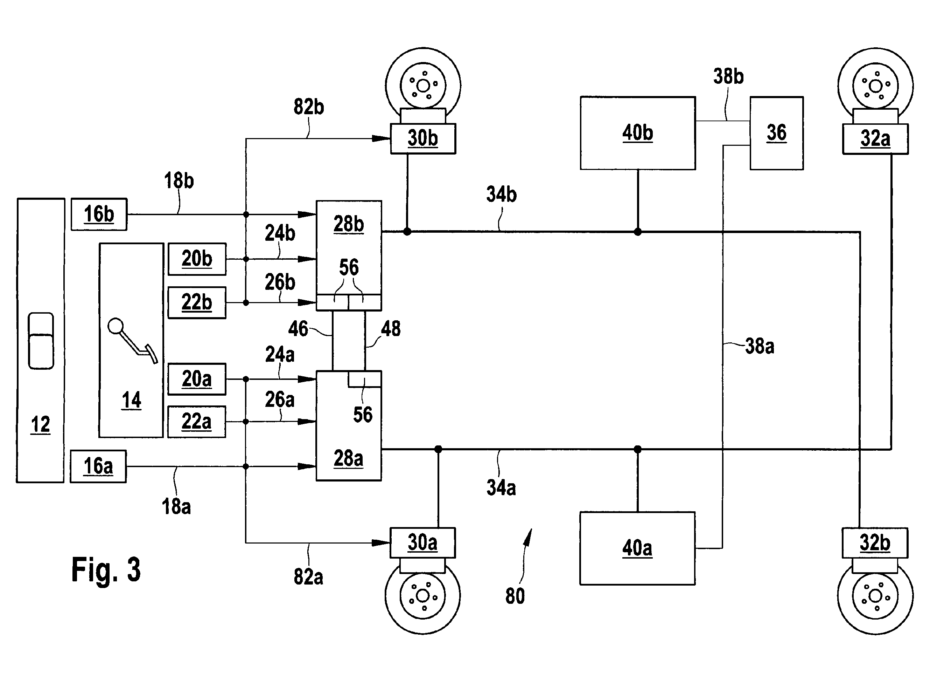

Figur 3 zeigt eine Ausführungsform des erfindungsgemäßen Bremssystems. Die in Figur 1 dargestellten Komponenten des Bremssystems 10 sind auch im Bremssystem 80 der Figur 3 vorhanden. Allerdings sind die Komponenten 42a, 42b, 44a, 44b, 50, 52 und 54 in Figur 3 nicht skizziert.

Im Gegensatz zu dem Bremssystem 10 weist das Bremssystem 80 zwei Leitungen 82a und 82b auf, über welche die Radaktoreinrichtungen 30a und 30b der Vorderräder mit der Bremspedalsensorik ihres Bremskreises direkt verbunden sind. Die Leitung 82a überträgt die Sensorsignale 18a, 24a und 26a von den Schaltern 16a und 22a und dem Sensor 20a an die Radaktoreinrichtung 30a. Entsprechend werden die Signale 18b, 24b und 26b nicht nur von der Bremssteuereinrichtung 28b, sondern auch auf der Radaktoreinrichtung 30b eingelesen. Die Radaktoreinrichtungen 30a und 30b sind dazu ausgelegt, die ihnen zugeteilten Sensorsignale 18a, 18b, 24a, 24b, 26a und 26b zumindest teilweise hinsichtlich eines auf das zugeordnete Rad auszuübenden Bremsmoments auszuwerten.

Wenn eine Radaktoreinrichtung 30a oder 30b erkennt, dass die ihr zugeordnete Bremssteuereinrichtung 28a oder 28b ausgefallen ist, so führt sie die Bremsung ihres Rades nicht mehr abhängig von dem Steuersignal ihrer eigenen Bremssteuereinrichtung 28a oder 28b aus. Stattdessen beginnt die Radaktoreinrichtung 30a oder 30b mit der Auswertung der direkt an sie übertragenen Sensorsignale 18a, 18b, 24a, 24b, 26a und 26b. Anhand dieser Sensorsignale 18a, 18b, 24a, 24b, 26a und 26b ermittelt die Radaktoreinrichtung 30a oder 30b, welches Bremsmoment sie auf das ihr zugeordnete Rad ausüben soll. Gleichzeitig kann die Radaktoreinrichtung 30a oder 30b ein Soll-Bremsmoment für die andere Radaktoreinrichtung 32a oder 32b ihres eigenen Bremskreises bestimmen. Anschließend gibt die Radaktoreinrichtung 30a oder 30b das ermittelte Soll-Bremsmoment an die andere Radaktoreinrichtung 32a oder 32b ihres eigenen Bremskreises aus. Als Alternative dazu kann die Radaktoreinrichtung 30a oder 30b auch die jeweiligen Sensorsignale 18a, 18b, 24a, 24b, 26a und 26b direkt an andere Radaktoreinrichtung 32a oder 32b des eigenen Bremskreises zur Auswertung übermitteln.

Ein Bordnetz 40a oder 40b des Bremssystems 80 unterbricht die Versorgung einer Radaktoreinrichtung 30a, 30b, 32a und/oder 32b nur auf Grund eines Befehls oder einer Botschaft von der zugehörigen Bremssteuereinrichtung 28a oder 28b über den Datenbus 34a oder 34b. Bei Fehlern in einer der beiden Bremssteuereinrichtungen 28a oder 28b bleibt die Spannungsversorgung der Radaktoreinrichtungen 30a, 30b, 32a und 32b, der Schalter 16a, 16b, 22a und 22b und der Sensoren 20a und 20b durch das jeweilige Bordnetz 40a oder 40b somit erhalten.

Wichtig ist es, festzuhalten, dass die Leitung 82a nicht mit der Bremssteuereinrichtung 28a verbunden ist. Auf diese Weise ist eine Übertragung der Sensorsignale 18a, 24a und/oder 26a von den Schaltern/Sensoren 16a, 20a und/oder 22a an die Radaktoreinrichtung 30a nicht von einem Ausfallen der Bremssteuereinrichtung 28a betroffen.

In dem Beispiel aus Figur 3 ist die Leitung 82a an alle drei Leitungen der Signale 18a, 24a und 26a angeschlossen. Als Alternative dazu kann die Leitung 82a auch von den Schaltern/Sensoren 16a, 20a und/oder 22a zu der Radaktoreinrichtung 30a verlaufen. Ebenso ist es möglich, von den Schaltern/Sensoren 16a, 20a und/oder 22a einzelne Leitungen zu legen, welche direkt zu der Radaktoreinrichtung 30a führen.

Die in dem oberen Abschnitt genannten Ausführungsbeispiele können selbstverständlich auch für die Leitung 82b, welche die Radaktoreinrichtung 30b mit den Signalen 18b, 24b und/oder 26b der Schalter/Sensoren 16b, 20b und/oder 22b versorgt, realisiert werden.

Bei dem Bremssystem 80 werden über die Datenbusse 34a und 34b Botschaftszähler, Datenkontrollen und Time-Out-Überwachungen für die Datensicherung zwischen einer Bremssteuereinrichtung 28a oder 28b und ihren zugehörigen Radaktoreinrichtungen 30a und 32a oder 30b und 32b eingesetzt. Dies stellt einen zusätzlichen Schutz für die Datenübertragung zwischen den Bremssteuereinrichtungen 28a und 28b und den zugehörigen Radaktoreinrichtungen 30a und 32a oder 30b und 32b dar.

Die Unterschiede zwischen dem Bremssystem 10 aus Figur 1 und dem Bremssystem 80 aus Figur 3 kommen zum Tragen, wenn mindestens eine der Bremssteuereinrichtungen 28a oder 28b ausfällt. Fällt bei dem Bremssystem 10 eine der Bremssteuereinrichtungen 28a oder 28b aus, so kann kein Signal mehr über die ausgefallene Bremssteuereinrichtung 28a oder 28b zu der zugehörigen Radaktoreinrichtungen 30a oder 30b übertragen werden. Die ausgefallene Bremssteuereinrichtung 28a oder 28b gibt auch kein Steuersignal mehr an die Radaktoreinrichtungen 30a und 32a oder 30b und 32b ihres Bremskreises aus.

Fällt hingegen beispielsweise am Bremssystem 80 die Bremssteuereinrichtung 28a aus, so kann jedes der Sensorsignale 18a, 24a und 26a der Schalter 16a und 22a und des Sensors 20a über die Leitung 82a an die Radaktoreinrichtung 30a übertragen werden. Zusätzlich kann auch die Radaktoreinrichtung 32a diese Sensorsignale18a, 24a und 26a über den Datenbus 34 erhalten. Beide Radaktoreinrichtungen 30a und 32a können eine Logik aufweisen, die bei einem Ausfall der eigenen Bremssteuereinrichtung 28a auf eine Bremsung abhängig von den empfangenen Signalen 18a, 24a und 26a umschaltet. Die Logik enthält vorzugsweise Elemente zur Speicherung. Sie ist dazu ausgelegt, das Ausfallen der eigenen Bremssteuereinrichtung 28a zu erkennen. Eine derartige Logik lässt sich in Hardware oder in Software realisieren. Die Radaktoreinrichtungen 30a und 32a ermitteln dann aus den Sensorsignalen 18a, 24a und 26a mit Hilfe einer festgelegten Kennlinie das den Sensorsignalen 18a, 24a und 26a entsprechende Soll-Bremsmoment. Vorzugsweise berücksichtigen die Radaktoreinrichtungen 30a und 32a dabei eine einzuhaltende Achslastverteilung durch eine bevorzugte Differenz zwischen dem Bremsmoment eines Vorderrads und dem Bremsmoment eines Hinterrads.

Ein Ausfallen einer Bremssteuereinrichtung 28a oder 28b wird über die Datenbusse 46 und/oder 48 der anderen Bremssteuereinrichtung 28a oder 28b mitgeteilt. Als Alternative dazu können die Bremssteuereinrichtungen 28a und 28b auch dazu ausgelegt sein, ein Ausfallen der benachbarten Bremssteuereinrichtungen 28a oder 28b aufgrund eines Ausbleibens von Meldungen von dieser selbst zu erkennen. Die noch funktionsfähige Bremssteuereinrichtung 28a oder 28b kann anschließend die von ihr noch ansteuerbaren Radaktoreinrichtungen 30a und 32a oder 30b und 32b so steuern, dass sie sich den Radaktoreinrichtungen 30a und 32a oder 30b und 32b des anderen Bremskreises mit der ausgefallenen Bremssteuereinrichtung 28a oder 28b anpassen. Hiermit kann ein symmetrisches Abbremsen der Räder erreicht werden.

Jede der Bremssteuereinrichtungen 28a und 28b des Bremssystems 80 erhält dazu ebenfalls eine Logik, die bei Ausfallen der anderen Bremssteuereinrichtung 28a oder 28b auf eine entsprechende Bremsung abhängig von der eingelesenen Bremspedalsensorik umschaltet. Diese Logik enthält ebenfalls Elemente zur Speicherung und Decodierung des sich bei Ausfallen der anderen Bremssteuereinrichtungen 28a oder 28b ergebenen Zustands. Eine Realisierung dieser Logik in Hardware oder Software ist möglich.

Tritt bei dem Bremssystem 80 die Situation auf, dass beide Bremssteuereinrichtungen 28a und 28b ausfallen, so kann auch in diesem Fall noch eine von den Sensorsignalen 18a, 18b, 24a, 24b, 26a und 26b gesteuerte Bremsung durchgeführt werden. Dies ist gewährleistet, da auch nach einem Ausfallen der beiden Bremssteuereinrichtungen 28a und 28b die jeweiligen Sensorsignale 18a, 18b, 24a, 24b, 26a und 26b zu den Radaktoreinrichtungen 30a und 30b übertragen werden. Dabei erkennt die Radaktoreinrichtung 30a über den Datenbus 34a, dass ihre zugehörige Bremssteuereinrichtung 28a ausgefallen ist. Entsprechend erkennt auch die Radaktoreinrichtung 30b, dass die Bremssteuereinrichtung 28b ausgefallen ist, da keine Signale mehr von dieser über den Datenbus 34b empfangen werden. In diesem Fall führen beide Radaktoreinrichtungen 30a und 30b eine von den Sensorsignalen 18a, 18b, 24a, 24b, 26a und 26b gesteuerte Bremsung durch. Zusätzlich können die Sensorsignale 18a, 18b, 24a, 24b, 26a und 26b über die Datenbusse 34a und 34b zu den Radaktoreinrichtungen 32a und 32b übertragen werden. Die Radaktoreinrichtungen 32a und 32b, welche an den Hinterrädern angeordnet sind, können die übertragenen Sensorsignale 18a, 18b, 24a, 24b, 26a und 26b anschließend auswerten und ihre Räder entsprechend abbremsen. Das unterschiedliche Bremsmoment der Vorderräder und Hinterräder wird entsprechend der gewünschten maximalen Fahrzeug-Verzögerung und der erforderlichen oder gewünschten Bremskraftverteilung auf die Achsen des Fahrzeugs eingestellt.

Der in den oberen Abschnitten für den Ausfall der beiden Bremssteuereinrichtungen 28a und 28b beschriebene Mechanismus funktioniert auch, sofern zusätzlich zu den beiden Bremssteuereinrichtungen 28a und 28b noch eine der Radaktoreinrichtungen 30a, 30b, 32a oder 32b ausfällt. Allerdings stehen in diesem Fall weniger bremsfähige Räder für die gesteuerte Bremsung zur Verfügung.

Im Weiteren wird das Beispiel betrachtet, dass die Bremssteuereinrichtungen 28a und 28b und die Radaktoreinrichtung 30a ausfallen. Das von der defekten Radaktoreinrichtung 30a betriebene Vorderrad vorne links kann nun nicht mehr gebremst werden. In diesem Fall können die Radaktoreinrichtungen 30b und 32b noch eine gesteuerte Bremsung durchrühren und das Ausfallen der Radaktoreinrichtung 30a durch ein verstärktes Abbremsen ihrer Räder ausgleichen, sofern höchstens die Hälfte der maximal möglichen Abbremsung angefordert wird.

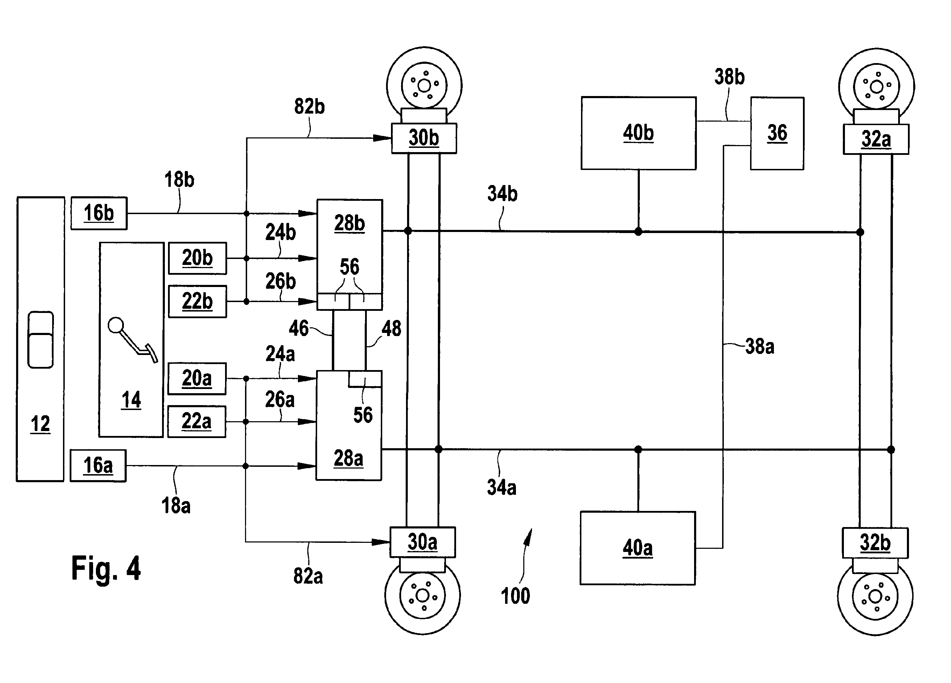

Figur 4 zeigt eine weitere Ausführungsform des erfindungsgemäβen Bremssystems. Das dargestellte Bremssystem 100 umfasst alle Komponenten des Bremssystems 80 der Figur 3. Auf ein Einzeichnen der Warnlampen 42a und 42b, ihrer Leitungen 44a und 44b und der externen Geräte 50, 52 und 54 wurde jedoch verzichtet.

Im Gegensatz zu dem Bremssystem 80 der Figur 3 weist das Bremssystem 100 der Figur 4 erweiterte Datenbusse 34a und 34b auf. Die Bremssteuereinrichtung 28a ist über den Datenbus 34a mit allen Radaktoreinrichtungen 30a, 30b, 32a und 32b verbunden. Entsprechend ist auch die Bremssteuereinrichtung 28b über den Datenbus 34b mit den Radaktoreinrichtungen 30a und 32a des ersten Bremskreises und den Radaktoreinrichtungen 30b und 32b des zweiten Bremskreises verbunden.

Über die Leitung 82a kann die Radaktoreinrichtung 30a die Signale 18a, 24a und 26a der Schalter 16a und 22a und des Sensors 20a erhalten. Ebenso leitet die Leitung 82b die Signale 18b, 24b und 26b der Schalter 16b und 22b und des Sensors 20b an die Radaktoreinrichtung 30b direkt weiter.

Die Logik der Radaktoreinrichtungen 30a und 30b ist so ausgeführt, dass diese bei einem aktiven Zustand der eigenen Bremssteuereinrichtung 28a oder 28b nur die von der eigenen Bremssteuereinrichtung 28a oder 28b ausgesendeten Steuersignale für ein Abbremsen der Räder berücksichtigen. Ist die eigene Bremssteuereinrichtung 28a oder 28b ausgefallen, während die andere Bremssteuereinrichtung 28a oder 28b sich noch im aktiven Zustand befindet und Steuersignale aussendet, so werden die Steuersignale der anderen Bremssteuereinrichtung 28a oder 28b zum Bremsen der Räder verwendet.

Jede der beiden Bremssteuereinrichtungen 28a und 28b liest die an sie weitergeleiteten Sensorsignale 18a, 18b, 24a, 24b, 26a und 26b ein und gibt die Steuersignale für die Radbremsmomente entsprechend an die Radaktoreinrichtungen 30a, 30b, 32a und 32b aus.

Zusätzlich können die Steuersignale für die Radbremsmomente mit Hilfe der von den Radaktoreinrichtungen 30a, 30b, 32a und/oder 32b zurückgemeldeten Ist-Bremsmomente geregelt werden.

Die vier Radbremsen des Fahrzeugs mit dem Bremssystem 100 verwenden nach einem Ausfallen von einer der beiden Bremssteuereinrichtungen 28a oder 28b die Radbremsmomente von der anderen Bremssteuereinrichtung 28a oder 28b. Die beiden Bremssteuereinrichtungen 28a und 28b müssen nur dann über entsprechend leistungsfähigere Rechner verfügen, welche auch entsprechend mehr Ressourcen benötigen, wenn sie nicht die Radbremsmomente, sondern eine andere momentenbestimmende Größe, beispielsweise die momentenbestimmende Spannung, berechnen.

Sind beide Bremssteuereinrichtungen 28a und 28b ausgefallen, so werten die Radaktoreinrichtungen 30a und 30b die Sensorsignale 16a, 16b, 24a, 24b, 26a und 26b selbst aus. In einer Weiterführung übertragen die den Vorderrädern zugeordneten Radaktoreinrichtungen 30a und 30b die eingelesenen Sensorsignale 16a, 16b, 24a, 24b, 26a und 26b an die den Hinterrädern zugeordneten Radaktoreinrichtungen 32a und 32b. Alle Radaktoreinrichtungen 30a, 30b, 32a und 32b sind dann nach einem Ausfallen der beiden Bremssteuereinrichtungen 28a und 28b dazu ausgelegt, die Sensorsignale 16a, 16b, 24a, 24b, 26a und 26b zu verarbeiten und entsprechend eine gesteuerte Bremsung mit variablem Sollwert durchzuführen.

Das Bremssystem 10 der Figur 1 mit zwei Bremskreisen weist den Nachteil auf, dass trotz der vier verwendeten Radaktoreinrichtungen 30a, 30b, 32a und 32b bei einem Ausfall einer der beiden Bremssteuereinrichtungen 28a oder 28b die verbleibende Bremswirkung des Bremssystems 10 deutlich reduziert ist. Mit dem Ausfall von einer der beiden Bremssteuereinrichtungen 28a und 28b wird sofort einer der beiden Bremskreise unwirksam, obwohl alle Radaktoreinrichtungen 30a, 30b, 32a und 32b noch funktionsfähig sind. Bei einem Ausfall von beiden Bremssteuereinrichtungen 28a und 28b des Bremssystems 10 ist keine Bremswirkung mehr vorhanden. Auch bei einem Ausfall den beiden Radaktoreinrichtungen 30a und32a oder 30b und 32b eines Bremskreise zusammen mit der Bremssteuereinrichtung 28a oder 28b des anderen Bremskreises ist keine Bremswirkung mehr vorhanden.

Im Gegensatz dazu weist das Bremssystem 100 den Vorteil auf, dass selbst nach einem Ausfallen der beiden Bremssteuereinrichtungen 28a und 28b und der drei Radaktoreinrichtungen 30b, 32a und 32b die verbliebene Radaktoreinrichtung 30a die Sensorsignale 18a, 24a und 26a noch befolgen kann. Das Bremssystem 100 ist damit so ausgebildet, dass ein damit ausgestattetes Fahrzeug in dieser gefährlichen Situation noch angehalten werden kann.

Sind die beiden Bremssteuereinrichtungen 28a und 28b und die drei Radaktoreinrichtungen 30a, 30b und 32b ausgefallen, so erkennt die noch funktionsfähige Radaktoreinrichtung 32a; dass sich die übrigen Komponenten des Bremssystems 100 nicht mehr im funktionsfähigen Zustand befinden. Die verbliebene Radaktoreinrichtung 32a ist in diesem Fall dazu ausgelegt, nach einem Erkennen dieser Situation ein automatisches Abbremsen des Fahrzeugs einzuleiten. Damit ist auch in einer derartigen Situation eine Mindestsicherheit für die Insassen des Fahrzeugs mit dem Bremssystem 100 noch gewährleistet.

## Patentansprüche

1. Bremssystem (80, 100) für ein Fahrzeug mit
- einer Sensoreinrichtung (16a, 16b, 20a, 20b, 22a, 22b), welche dazu ausgelegt ist, eine Eingabe eines Fahrers des Fahrzeugs zum Reduzieren der aktuellen Geschwindigkeit des Fahrzeugs zu erfassen und ein entsprechendes erstes und zweites Sensorsignal (18a, 18b, 24a, 24b, 26a, 26b) bereitzustellen,
- einer ersten und einer zweiten Bremssteuereinrichtung (28a, 28b), welche mit der Sensoreinrichtung (16a, 16b, 20a, 20b, 22a, 22b) direkt verbunden sind, wobei jede der beiden Bremssteuereinrichtungen (28a, 28b) im aktiven Zustand dazu ausgelegt ist, nach einem Empfangen des ersten und/oder zweiten Sensorsignals (18a, 18b, 24a, 24b, 26a, 26b) ein entsprechendes Steuersignal bereitzustellen, und
- einer ersten und einer zweiten Signalleitung (34a, 34b) zum Weiterleiten des Steuersignals, wobei die erste Signalleitung (34a) die erste Bremssteuereinrichtung (28a) mit einer ersten und einer zweiten Radaktoreinrichtung (30a, 32a) direkt verbindet und die zweite Signalleitung (34b) die zweite Bremssteuereinrichtung (28b) mit einer dritten und einer vierten Radaktoreinrichtung (30b, 32b) direkt verbindet, wobei jede der vier Radaktoreinrichtungen (30a, 30b, 32a, 32b) jeweils einem Rad des Fahrzeugs zugeordnet ist und im aktiven Zustand dazu ausgelegt ist, nach einem Empfang des Steuersignals ein Bremsmoment auf das zugeordnete Rad auszuüben,
**dadurch gekennzeichnet, dass**
die erste Radaktoreinrichtung (30a) direkt mit der Sensoreinrichtung (16a, 20a, 22a) verbunden ist, und dass
die erste Radaktoreinrichtung (30a) mit einer ersten Untereinrichtung (16a, 20a, 22a) der Sensoreinrichtung (16a, 16b, 20a, 20b, 22a, 22b) über eine sechste Signalleitung (82a) direkt verbunden ist und die dritte Radaktoreinrichtung (30b) mit einer zweiten Untereinrichtung (16b, 20b, 22b) der Sensoreinrichtung (16a, 16b, 20a, 20b, 22a, 22b) über eine siebte Signalleitung (82b) direkt verbunden ist.

2. Bremssystem (100) nach Anspruch 1, wobei die erste Radaktoreinrichtung (30a) an die zweite Signalleitung (34b) angeschlossen ist und die dritte Radaktoreinrichtung (30b) an die erste Signalleitung (34a) angeschlossen ist.

3. Bremssystem (100) nach Anspruch 2, wobei die zweiten Radaktoreinrichtung (32a) an die zweite Signalleitung (34b) angeschlossen ist und die vierte Radaktoreinrichtung (32b) an die erste Signalleitung (34a) angeschlossen ist.

4. Bremssystem (80, 100) nach einem der vorhergehenden Ansprüche, wobei die erste und die zweite Bremssteuereinrichtung (28a, 28b) über eine fünfte Signalleitung (46, 48) direkt miteinander verbunden sind, und wobei jede der beiden Bremssteuereinrichtungen (28a, 28b) im aktiven Zustand dazu ausgelegt ist, zu erkennen, ob die andere Bremssteuereinrichtung (28a, 28b) im aktiven Zustand ist.

5. Bremssystem (100) nach Anspruch 4, wobei die erste und die zweite Radaktoreinrichtung (30a, 32a) im aktiven Zustand dazu ausgelegt sind, nach einem Erkennen, dass die erste Bremssteuereinrichtung (28a) im inaktiven Zustand ist, die Steuersignale der zweiten Bremssteuereinrichtung (28b) über die zweite Signalleitung (34b) zu empfangen.

6. Bremssystem (80, 100) nach Anspruch 1, wobei die erste Radaktoreinrichtung (30a) im aktiven Zustand dazu ausgelegt ist, zu erkennen, ob die erste Bremssteuereinrichtung (28a) im aktiven Zustand ist, und nach einem Erkennen, dass die erste Bremssteuereinrichtung (28a) im inaktiven Zustand ist, das über die sechste Signalleitung (82a) von der ersten Untereinrichtung (16a, 20a, 22a) übermittelte erste und/oder zweite Sensorsignal (18a, 18b, 24a, 24b, 26a, 26b) auszuwerten und ein dem ersten und/oder zweiten Sensorsignal (18a, 18b, 24a, 24b, 26a, 26b) entsprechendes Bremsmoment auf das zugeordnete Rad auszuüben.

7. Bremssystem (80, 100) nach einem der vorhergehenden Ansprüche, wobei zumindest eine der Bremssteuereinrichtungen (28a, 28b) oder eine der Radaktoreinrichtungen (30a, 30b, 32a, 32b) im aktiven Zustand dazu ausgelegt ist, ihre Funktionsfähigkeit zu überprüfen und sich bei einem Erkennen einer eingeschränkten Funktionsfähigkeit in den inaktiven Zustand zu schalten.

8. Bremssystem (80, 100) nach einem der vorhergehenden Ansprüche, wobei mindestens eine der Radaktoreinrichtungen (30a, 30b, 32a, 32b) im aktiven Zustand dazu ausgelegt ist, zu erkennen, ob eine vorgegebene Anzahl von Bremssteuereinrichtungen (28a, 28b) und/oder Radaktoreinrichtungen (30a, 30b, 32a, 32b) im inaktiven Zustand ist, und nach einem Erkennen, dass die vorgegebene Anzahl von Bremssteuereinrichtungen (28a, 28b) und/oder Radaktoreinrichtungen (30a, 30b, 32a, 32b) im inaktiven Zustand ist, ein vorgegebenes Bremsmoment automatisch auf das zugeordnete Rad auszuüben.

9. Verfahren zum Betreiben eines Bremssystems (80, 100) für ein Fahrzeug mit einer Sensoreinrichtung (16a, 16b, 20a, 20b, 22a, 22b), welche dazu ausgelegt ist, eine Eingabe eines Fahrers des Fahrzeugs zum Reduzieren der aktuellen Geschwindigkeit des Fahrzeugs zu erfassen und ein entsprechendes erstes und zweites Sensorsignal (18a, 18b, 24a, 24b, 26a, 26b) bereitzustellen, mit einer ersten und einer zweiten Bremssteuereinrichtung (28a, 28b), welche mit der Sensoreinrichtung (16a, 16b, 20a, 20b, 22a, 22b) direkt verbunden sind, wobei jede der beiden Bremssteuereinrichtungen (28a, 28b) im aktiven Zustand dazu ausgelegt ist, nach einem Empfangen des ersten und/oder zweiten Sensorsignals (18a, 18b, 24a, 24b, 26a, 26b) ein entsprechendes Steuersignal bereitzustellen, und mit einer ersten und einer zweiten Signalleitung (34a, 34b) zum Weiterleiten des Steuersignals, wobei die erste Signalleitung (34a) die erste Bremssteuereinrichtung (28a) mit einer ersten und einer zweiten Radaktoreinrichtungen (30a, 32a) direkt verbindet und die zweite Signalleitung (34b) die zweite Bremssteuereinrichtung (28b) mit einer dritten und einer vierten Radaktoreinrichtung (30a, 30b, 32a, 32b) direkt verbindet, wobei jede der vier Radaktoreinrichtungen (30a, 30b, 32a, 32b) jeweils einem Rad des Fahrzeugs zugeordnet ist und im aktiven Zustand dazu ausgelegt ist, nach einem Empfang des Steuersignals ein Bremsmoment auf das zugeordnete Rad auszuüben,
**dadurch gekennzeichnet, dass**
die erste Radaktoreinrichtung (30a) mit der ersten Untereinrichtung (16a, 20a, 22a) der Sensoreinrichtung (16a, 16b, 20a, 20b, 22a, 22b) über eine sechste Signalleitung (82a) direkt verbunden ist und die dritte Radaktoreinrichtung (30b) mit einer zweiten Untereinrichtung (16b, 20b, 22b) der Sensoreinrichtung (16a, 16b, 20a, 20b, 22a, 22b) über eine siebte Signalleitung (82b) direkt verbunden ist, und
dass das Verfahren den Schritt des direkten Weiterleitens des ersten und/oder zweiten Sensorsignals (18a, 18b, 24a, 24b, 26a, 26b) von der Sensoreinrichtung (16a, 20a, 22a) zumindest an die erste der Radaktoreinrichtungen (30a, 32a) aufweist.

## Claims

1. Brake system (80, 100) for a vehicle, having
- a sensor device (16a, 16b, 20a, 20b, 22a, 22b) which is configured to sense an input by a driver of the vehicle for reducing the current speed of the vehicle, and to make available a corresponding first and second sensor signal (18a, 18b, 24a, 24b, 26a, 26b),
- a first and a second brake control device (28a, 28b) which are directly connected to the sensor device (16a, 16b, 20a, 20b, 22a, 22b), wherein each of the two brake control devices (28a, 28b) is configured in the active state to make available a corresponding control signal after reception of the first and/or second sensor signal (18a, 18b, 24a, 24b, 26a, 26b), and
- a first and a second signal line (34a, 34b) for passing on the control signal, wherein the first signal line (34a) directly connects the first brake control device (28a) to a first and a second wheel actuator device (30a, 32a), and the second signal line (34b) directly connects the second brake control device (28b) to a third and a fourth wheel actuator device (30b, 32b), wherein each of the four wheel actuator devices (30a, 30b, 32a, 32b) is respectively assigned to a wheel of the vehicle and in the active state is configured to apply a braking torque to the assigned wheel after reception of the control signal,
**characterized in that**
the first wheel actuator device (30a) is directly connected to the sensor device (16a, 20a, 22a), and **in that**
the first wheel actuator device (30a) is directly connected to a first sub-unit (16a, 20a, 22a) of the sensor device (16a, 16b, 20a, 20b, 22a, 22b) via a sixth signal line (82a), and the third wheel actuator device (30b) is directly connected to a second sub-unit (16b, 20b, 22b) of the sensor device (16a, 16b, 20a, 20b, 22a, 22b) via a seventh signal line (82b).

2. Brake system (100) according to Claim 1, wherein the first wheel actuator device (30a) is connected to the second signal line (34b), and the third wheel actuator device (30b) is connected to the first signal line (34a).

3. Brake system (100) according to Claim 2, wherein the second wheel actuator device (32a) is connected to the second signal line (34b), and the fourth wheel actuator device (32b) is connected to the first signal line (34a).

4. Brake system (80, 100) according to one of the preceding claims, wherein the first and the second brake control devices (28a, 28b) are directly connected to one another via a fifth signal line (46, 48), and wherein each of the two brake control devices (28a, 28b) are configured in the active state to detect whether the other brake control device (28a, 28b) is in the active state.

5. Brake system (100) according to Claim 4, wherein the first and the second wheel actuator devices (30a, 32a) are configured in the active state to receive the control signals of the second brake control device (28b) via the second signal line (34b) after having detected that the first brake control device (28a) is in the inactive state.

6. Brake system (80, 100) according to Claim 1, wherein the first wheel actuator device (30a) is configured in the active state to detect whether the first brake control device (28a) is in the active state, and to evaluate, after having detected that the first brake control device (28a) is in the inactive state, the first and/or second sensor signals/signal (18a, 18b, 24a, 24b, 26a, 26b) transmitted by the first sub-unit (16a, 20a, 22a) via the sixth signal line (82a), and to apply a braking torque corresponding to the first and/or second sensor signal (18a, 18b, 24a, 24b, 26a, 26b), to the assigned wheel.

7. Brake system (80, 100) according to one of the preceding claims, wherein at least one of the brake control devices (28a, 28b) or one of the wheel actuator devices (30a, 30b, 32a, 32b) is configured in the active state to check its functional capability and to switch into the inactive state when a restricted functional capability is detected.

8. Brake system (80, 100) according to one of the preceding claims, wherein at least one of the wheel actuator devices (30a, 30b, 32a, 32b) is configured in the active state to detect whether a predefined number of brake control devices (28a, 28b) and/or wheel actuator devices (30a, 30b, 32a, 32b) is in the inactive state, and to apply, after having detected that the predefined number of brake control devices (28a, 28b) and/or wheel actuator devices (30a, 30b, 32a, 32b) is in the inactive state, a predefined braking torque automatically to the assigned wheel.

9. Method for operating a brake system (80, 100) for a vehicle, having a sensor device (16a, 16b, 20a, 20b, 22a, 22b) which is configured to sense an input by a driver of the vehicle for reducing the current speed of the vehicle, and to make available a corresponding first and second sensor signal (18a, 18b, 24a, 24b, 26a, 26b), having a first and a second brake control device (28a, 28b) which are directly connected to the sensor device (16a, 16b, 20a, 20b, 22a, 22b), wherein each of the two brake control devices (28a, 28b) is configured in the active state to make available a corresponding control signal after reception of the first and/or second sensor signal (18a, 18b, 24a, 24b, 26a, 26b), and having a first and a second signal line (34a, 34b) for passing on the control signal, wherein the first signal line (34a) directly connects the first brake control device (28a) to a first and a second wheel actuator device (30a, 32a), and the second signal line (34b) directly connects the second brake control device (28b) to a third and a fourth wheel actuator device (30a, 30b, 32a, 32b), wherein each of the four wheel actuator devices (30a, 30b, 32a, 32b) is respectively assigned to a wheel of the vehicle and in the active state is configured to apply a braking torque to the assigned wheel after reception of the control signal,
**characterized in that**
the first wheel actuator device (30a) is directly connected to the first sub-unit (16a, 20a, 22a) of the sensor device (16a, 16b, 20a, 20b, 22a, 22b) via a sixth signal line (82a), and the third wheel actuator device (30b) is directly connected to a second sub-unit (16b, 20b, 22b) of the sensor device (16a, 16b, 20a, 20b, 22a, 22b) via a seventh signal line (82b), and
**in that** the method has the step of directly passing on the first and/or second sensor signal (18a, 18b, 24a, 24b, 26a, 26b) from the sensor device (16a, 20a, 22a) at least to the first of the wheel actuator devices (30a, 32a).

## Revendications

1. Système de freinage (80, 100) pour véhicule, présentant
un dispositif de détection (16a, 16b, 20a, 20b, 22a, 22b) conçu pour détecter que le conducteur du véhicule a commandé une réduction de la vitesse en cours du véhicule et pour former un premier et un deuxième signal de détection (18a, 18b, 24a, 24b, 26a, 26b) correspondants,
un premier et un deuxième dispositif (28a, 28b) de commande de freinage reliés directement au dispositif de détection (16a, 16b, 20a, 20b, 22a, 22b), chacun des deux dispositifs (28a, 28b) de commande de freinage étant conçu pour, à l'état activé, former un signal de commande approprié lors de la réception du premier et/ou du deuxième signal de détection (18a, 18b, 24a, 24b, 26a, 26b) et
un premier et un deuxième conducteur de signaux (34a, 34b) qui transmettent le signal de commande, le premier conducteur de signaux (34a) reliant directement le premier dispositif (28a) de commande de freinage à un premier et à un deuxième dispositif d'actionneur de roue (30a, 32a) et le deuxième conducteur de signaux (34b) reliant directement le deuxième dispositif (28b) de commande de freinage à un troisième et à un quatrième dispositif d'actionneur de roue (30b, 32b), chacun des quatre dispositifs d'actionneur de roue (30a, 30b, 32a, 32b) étant associé à une roue respective du véhicule et étant conçu pour, à l'état activé, exercer un couple de freinage sur la roue associée lors de la réception du signal de commande, **caractérisé en ce que**
le premier dispositif (30a) d'actionneur de roue est relié directement au dispositif de détection (16a, 20a, 22a) et
**en ce que** le premier dispositif (30a) d'actionneur de roue est relié directement par un premier sous-dispositif (16a, 20a, 22a) du dispositif de détection (16a, 16b, 20a, 20b, 22a, 22b) par un sixième conducteur de signaux (82a) et le troisième dispositif (30b) d'actionneur de roue est relié directement à un deuxième sous-dispositif (16b, 20b, 22b) du dispositif de détection (16a, 16b, 20a, 20b, 22a, 22b) par un septième conducteur de signaux (82b).

2. Système de freinage (100) selon la revendication 1, dans lequel le premier dispositif (30a) d'actionneur de roue est raccordé au deuxième conducteur de signaux (34b) et en ce que le troisième dispositif (30b) d'actionneur de roue est raccordé au premier conducteur de signaux (34a).

3. Système de freinage (100) selon la revendication 2, dans lequel le deuxième dispositif (32a) d'actionneur de roue est raccordé au deuxième conducteur de signaux (34b) et en ce que le quatrième dispositif (32b) d'actionneur de roue est raccordé au premier conducteur de signaux (34a).

4. Système de freinage (80, 100) selon l'une des revendications précédentes, dans lequel le premier et le deuxième dispositif (28a, 28b) de commande de freinage sont reliés directement l'un à l'autre par un cinquième conducteur de signaux (46, 48) et en ce que chacun des deux dispositifs (28a, 28b) de commande de freinage est conçu pour, à l'état activé, détecter si l'autre dispositif (28a, 28b) de commande de freinage est à l'état activé.

5. Système de freinage (100) selon la revendication 4, dans lequel le premier et le deuxième dispositif (30a, 32a) d'actionneur de roue sont conçus pour, à l'état activé, recevoir les signaux de commande du deuxième dispositif (28b) de commande de freinage par l'intermédiaire du deuxième conducteur de signaux (34b) après détection que le premier dispositif (28a) de commande de freinage est à l'état inactivé,.

6. Système de freinage (80, 100) selon la revendication 1, dans lequel le premier dispositif (30a) d'actionneur de roue est conçu pour, à l'état activé, détecter si le premier dispositif (28a) de commande de freinage est à l'état activé et après détection que le premier dispositif (28a) de commande de freinage est à l'état inactivé, évaluer le premier et/ou le deuxième signal de détection (18a, 18b, 24a, 24b, 26a, 26b) transmis sur le sixième conducteur de signaux (82a) par le premier sous-dispositif (16a, 20a, 22a) et pour exercer sur la roue associée un couple de freinage qui correspond au premier et/ou au deuxième signal de détection (18a, 18b, 24a, 24b, 26a, 26b).

7. Système de freinage (80, 100) selon l'une des revendications précédentes, dans lequel au moins l'un des dispositifs (28a, 28b) de commande de freinage ou au moins un des dispositifs (30a, 30b, 32a, 32b) d'actionneur de roue est conçu pour, à l'état activé, vérifier son bon fonctionnement et se commuter dans l'état inactivé en cas de détection que leur bon fonctionnement est limité.

8. Système de freinage (80, 100) selon l'une des revendications précédentes, dans lequel au moins l'un des dispositifs (30a, 30b, 32a, 32b) d'actionneur de roue est conçu pour, à l'état actif, détecter si un nombre prédéterminé de dispositifs (28a, 28b) de commande de freinage et/ou de dispositifs (30a, 30b, 32a, 32b) d'actionneur de roue est à l'état inactivé et, après détection que le nombre prédéterminé de dispositifs (28a, 28b) de commande de freinage et/ou de dispositifs (30a, 30b, 32a, 32b) d'actionneur de roue est à l'état inactivé, exercer automatiquement un couple de freinage prédéterminé sur la roue associée.

9. Procédé de conduite d'un système de freinage (80, 100) pour véhicule présentant
un dispositif de détection (16a, 16b, 20a, 20b, 22a, 22b) conçu pour détecter que le conducteur du véhicule a commandé une réduction de la vitesse en cours du véhicule et pour former un premier et un deuxième signal de détection (18a, 18b, 24a, 24b, 26a, 26b) correspondants,
un premier et un deuxième dispositif (28a, 28b) de commande de freinage reliés directement au dispositif de détection (16a, 16b, 20a, 20b, 22a, 22b), chacun des deux dispositifs (28a, 28b) de commande de freinage étant conçu pour, à l'état activé, former un signal de commande approprié lors de la réception du premier et/ou du deuxième signal de détection (18a, 18b, 24a, 24b, 26a, 26b) et
un premier et un deuxième conducteur de signaux (34a, 34b) qui transmettent le signal de commande, le premier conducteur de signaux (34a) reliant directement le premier dispositif (28a) de commande de freinage à un premier et à un deuxième dispositif d'actionneur de roue (30a, 32a) et le deuxième conducteur de signaux (34b) reliant directement le deuxième dispositif (28b) de commande de freinage à un troisième et à un quatrième dispositif d'actionneur de roue (30a, 30b, 32a, 32b), chacun des quatre dispositifs d'actionneur de roue (30a, 30b, 32a, 32b) étant associé à une roue respective du véhicule et étant conçu pour, à l'état activé, exercer un couple de freinage sur la roue associée lors de la réception du signal de commande, **caractérisé en ce que**
le premier dispositif (30a) d'actionneur de roue est relié directement par un premier sous-dispositif (16a, 20a, 22a) du dispositif de détection (16a, 16b, 20a, 20b, 22a, 22b) par un sixième conducteur de signaux (82a) et le troisième dispositif (30b) d'actionneur de roue est relié directement à un deuxième sous-dispositif (16b, 20b, 22b) du dispositif de détection (16a, 16b, 20a, 20b, 22a, 22b) par un septième conducteur de signaux (82b) et
**en ce que** le procédé présente l'étape qui consiste à envoyer directement le premier et/ou le deuxième signal de détection (18a, 18b, 24a, 24b, 26a, 26b) par le dispositif de détection (16a, 20a, 22a) au moins au premier des dispositifs (30a, 32a) d'actionneur de roue.
